# EUROPÄISCHE PATENTSCHRIFT

(11) **EP 0 503 408 B1**
(45) Veröffentlichungstag und Bekanntmachung des Hinweises auf die Patenterteilung: **25.01.1995**
(21) Anmeldenummer: 92103505.1
(22) Anmeldetag: 29.02.1992
(51) Int. Cl.: A01D 41/12, A01F 12/54

(54) **Erntemaschine, insbesondere Mähdrescher, mit einem Gebläse und einer von einem Chassis zumindest teilweise umgebenen Verarbeitungseinheit**
Harvesting machine, particularly combine harvester, with a blower and a working unit at least partially surrounded by a frame
Machine de récolte, notamment moissonneuse-batteuse, avec une soufflerie et une unité de traitement au moins partiellement entourée d'un châssis

(30) Priorität: 15.03.1991 US 669787
(43) Veröffentlichungstag der Anmeldung: 16.09.1992
(73) Patentinhaber: DEERE & COMPANY, Moline, Illinois 61265 (US)
(72) Erfinder: Stickler, Mark Fredrick, Silvis, Illinois 61282 (US); Benhart, Michael Dwain, Moline, Illinois 61265 (US)
(74) Vertreter: Feldmann, Bernhard

(56) Entgegenhaltungen:
- EP-A- 0 224 750
- US-A- 1 848 252
- US-A- 1 854 954
- US-A- 4 711 253

## Beschreibung

Die Erfindung betrifft eine Erntemaschine, insbesondere Mähdrescher, mit einem Gebläse und einer von einem Chassis zumindest teilweise umgebenen Verarbeitungseinheit, wobei Rückstände anfallen, die sich innerhalb des Chassis im Bereich der Verarbeitungseinheit anlagern.

Die US-A-1,854,954 und die US-A-1,848,252 offenbaren jeweils eine Staubentfernungsvorrichtung für eine Dreschmaschine, mit deren Hilfe es möglich ist, Staub- und Spreuanlagerungen oberhalb der Dreschtrommel und der Schüttler zu vermeiden, so daß in deren Bereich anfallende Staub- Kurzstroh- und/oder Spreumengen nicht zu Verstopfungen oder ungewollten Schmutzentwicklungen beim Warten der Dreschmaschine führen. Zur Abfuhr dieser Rückstände wird eine Saugvorrichtung verwendet, die diese Schmutzstoffe über ein Rohr zu einer entfernten Stelle abführt.

Diese Staubentfernungsvorrichtungen sind insoweit von Nachteil, als sie als Saugvorrichtung ausgebildet sind und somit bei Undichtigkeiten in der Leitungsführung an Wirksamkeit verlieren und schwere Teilchen evtl. nicht fördern. Zum anderen bedingt die Abfuhr zu einer geeigneten Stelle, daß die Maschine feststeht, was allenfalls bei stationären Dreschmaschinen der Fall ist.

Es ist darüber hinaus z. B. aus der US-A-4,711,253 ein Spreugebläse bekannt, das die Spreu seitlich zu einem Mähdreschergehäuse hinausbläst.

Diese Vorrichtung ist nachteilig, weil sie ebenfalls ein separates Gebläse benötigt und Anlagerungen außerhalb des Spreustroms nicht erfaßt.

Schließlich ist es aus der EP-A1-0 443 210, die nach dem Prioritätstag dieser Patentanmeldung veröffentlicht worden ist, bekannt, von der Kühlluft für eine Verbrennungskraftmaschine einen Teilstrom abzuzweigen, um zur Vermeidung einer Brandgefahr die Bodenfläche im Bereich der Verbrennungskraftmaschine von Spreu und dergleichen sauber zu halten.

Die der Erfindung zugrunde liegende Aufgabe wird darin gesehen, eine fahrbare Erntemaschine vorzuschlagen, bei der Ansammlungen von Spreu- Kurzstroh und/oder Staub, also Rückständen im Bereich einer Verarbeitungseinheit, z. B. oberhalb einer Dresch- oder Abscheideeinheit, ohne großen zusätzlichen Aufwand vermieden werden, damit Verstopfungen und eine unerwünschte Staubentwicklung bei der Wartung nicht entstehen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise wird der Druckluftstrom eines ohnehin vorhandenen Gebläses zusätzlich dazu benutzt, unerwünschte Ablagerungen nicht entstehen zu lassen bzw. aus den kritischen Bereichen herauszublasen. Der Aufbau eines genügend hohen Luftüberdrucks ist einfacher zu erreichen als der bekannte Luftunterdruck, weil Undichtigkeiten im System und entstehende Wirbel bei der Luftführung von geringerem Einfluß sind.

Bei dem Gebläse handelt es sich in vorteilhafter Weise um ein solches für die Kühlung eines Verbrennungsmotors, den Wärmetauscher einer Klimaanlage oder einer Hydraulikeinheit.

Von großer Wirkung ist die Erfindung in Fällen, in denen ein hoher Staub-, Kurzstroh- oder Spreuanfall auftritt. Dies ist der Fall bei axial oder tangential wirkenden Dresch- oder Abscheideeinheiten, aber auch bei Feldhäckslern, in bzw. auf denen sich trockene Blätter von Maispflanzen oder anderen Erntegütern anlagern.

Eine optimale Führung der Druckluft kann durch die Verwendung eines Deflektors erreicht werden, der so geformt- oder angeordnet ist, daß er die Druckluft in die kritischen Bereiche oder so leitet, daß Wirbel entstehen, die die Eckbereiche reinigen.

Um insbesondere bei gekrümmten Kanälen und solchen mit einem großen Querschnitt Wirbel zu vermeiden, ist es sinnvoll, in den Kanal eine Leitwand einzufügen, die die jeweiligen Luftschichten dünner und somit leitfähiger macht.

Durch die unterschiedliche Luftstromführung kann mehreren Erfordernissen Rechnung getragen werden, nämlich der vollflächigen Umströmung einer horizontal ausgerichteten Brennkraftmaschine und der Erzielung eines Pralleffekts infolge des Auftreffens der Druckluft von oben auf die Verarbeitungseinheit.

Wenn die Druckluft von einem Auftreffbereich aus in bezug auf die Längsachse der Erntemaschine nach vorne und nach hinten geführt wird, ist gewährleistet, daß die gesamte Verarbeitungseinheit auf ihrer Oberseite sauber gehalten wird.

Die Abfuhr der Schmutzstoffe durch vorteilhafterweise große seitliche Auslaßöffnungen und einen dünnen Spalt zwischen der Verarbeitungseinheit und der Decke des die Verarbeitungseinheit umgebenden Gehäuses gewährleistet bei strömungstechnisch höchstwirksamer Luftführung eine gute Reinhaltung der kritischen Bereiche.

In der Zeichnung ist ein nachfolgend näher beschriebenes Ausführungsbeispiel der Erfindung dargestellt. Es zeigt:
- Fig. 1: eine erfindungsgemäße Erntemaschine in Seitenansicht und schematischer Darstellung,
- Fig. 2: die Erntemaschine in Draufsicht,
- Fig. 3: einen Kanal der Erntemaschine in Seitenansicht und im Schnitt und
- Fig. 4: den Kanal aus Figur 3 in Vorderansicht.

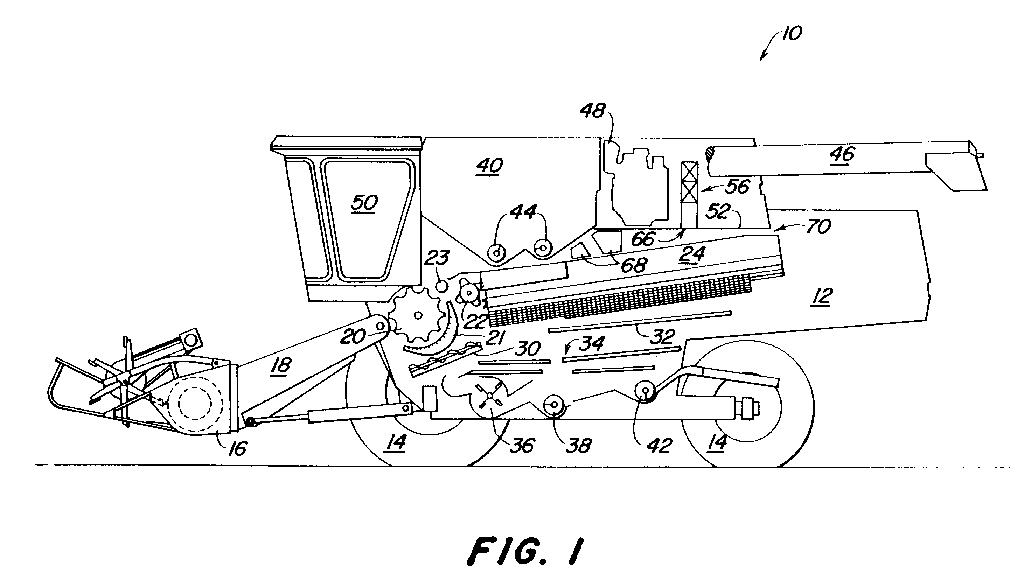

Figur 1 zeigt eine selbstfahrende Erntemaschine 10 in der Art eines Mähdreschers mit einem Chassis 12, das sich auf dem Boden über Räder 14 abstützt und von diesen fortbewegt wird. Die Räder 14 werden auf nicht gezeigte Weise über ein Getriebe und einen Motor angetrieben, um die Erntemaschine 10 über das Feld zu bewegen. An den vorderen Endbereich der Erntemaschine 10 ist eine Erntebergungsvorrichtung 16 in der Art eines Schneidwerks angeschlossen, um auf dem Feld stehendes Erntegut aufzunehmen und anschließend durch ein Fördergehäuse 18 nach oben einer Dresch- und Abscheidevorrichtung zuzuleiten. Die Dresch- und Abscheidevorrichtung enthält eine Dreschtrommel 20 und einen dieser zugeordneten Dreschkorb 21, denen das Erntegut zunächst zugeführt wird. Anschließend wird das ausgedroschene Erntegut einer Abstreifrolle 23 und einer Wendetrommel 22 aufgegeben, von denen aus es in eine axial wirkende, abscheidende Verarbeitungseinheit 24 gelangt.

Eine mit diesem Ausführungsbeispiel vergleichbare abscheidende Verarbeitungseinheit 24 ist in der US-A-4,884,994 beschrieben, deren Offenbarung hiermit einbezogen wird. Eine derartige Verarbeitungseinheit 24 enthält ein Paar seitlich nebeneinander angeordneter zylindrischer, rohrähnlicher Gehäuse. In jedem der Gehäuse ist ein Rotor vorgesehen, der mit festen Fingern oder Zinken bestückt ist. Die Wendetrommel 22 verlassendes Erntegut wird von oben her in die Gehäuse eingeworfen, wo es von den Rotoren erfaßt wird. Die obenliegende Innenfläche jedes Gehäuses ist mit Leitschienen versehen, um das Erntegut mit Bezug auf die Vorwärtsfahrtrichtung der Erntemaschine 10 nach hinten zu befördern, wenn der Rotor das Erntegut nach oben in Eingriff mit den Leitschienen wirft. Der Bodenbereich jedes Gehäuses ist mit Leisten ausgerüstet, zwischen denen Körner und Kurzstroh hindurch auf einen Schüttelboden 32 fallen können. Das verbleibende Stroh wird am rückwärtigen Ende der Gehäuse ausgeworfen.

Bei einer anderen Erntemaschine, z. B. einem Feldhäcksler, kann die Verarbeitungseinheit von einer Häckseltrommel, einem Gebläseförderer oder anderen Komponenten gebildet werden. Desgleichen kann bei einer Presse die Verarbeitungseinheit aus einem Bindeapparat oder einem Preßmechanismus bestehen, wobei das Gebläse an einem Hydraulikkühlaggregat vorgesehen ist.

Körner, Kurzstroh und Spreu, die aus der Trenn- und Abscheidevorrichtung abgegeben werden, fallen auf einen Schneckenförderer 30 und den Schüttelboden 32, von denen sie jeweils einem Siebkasten 34 aufgegeben werden. Dem Siebkasten 34 wird von einem Gebläse 36 Luft zugeführt, um eine Trennung der Körner von den übrigen Bestandteilen durchzuführen. Gereinigtes Getreide wird mittels einer Körnerschnecke 38 einem nicht gezeigten Elevator zugeführt, der es wiederum zu einem Korntank 40 fördert. Eine Überkehrschnecke 42 liefert nicht ausgedroschene Ährenstücke mittels eines weiteren nicht gezeigten Elevators zurück an die Dreschvorrichtung. Das gereinigte Getreide wird aus dem Korntank 40 durch ein Entladesystem entfernt, das eine Querschnecke 44 und ein Entleerrohr 46 enthält.

Die verschiedenen zuvor aufgezählten Komponenten werden mittels eines Verbrennungsmotors 48 angetrieben, der von einer Fahrerkabine 50 aus von einem Fahrer bedient wird. Die Dreschvorrichtung, die Verarbeitungseinheit 24 und der Siebkasten 34 sind in einem Raum zwischen den Wänden des Chassis 12 untergebracht.

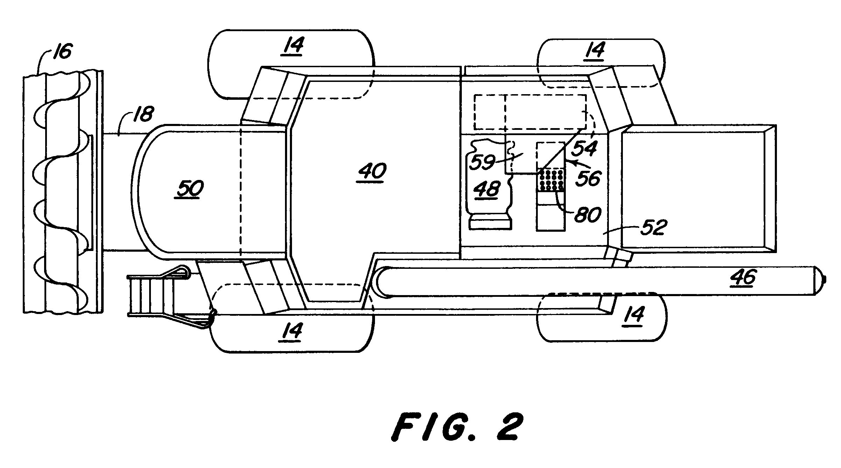

Wie aus Figur 2 hervorgeht, ist der Verbrennungsmotor 48 auf eine Arbeitsplattform 52 rückwärtig des Korntanks 40 aufgesetzt, wobei von der Arbeitsplattform 52 aus der Verbrennungsmotor 48 gewartet werden kann. Ein nicht näher dargestelltes Kühlsystem für den Verbrennungsmotor 48 mit einem Flügelrad, einem Wärmetauscher und einem selbstreinigenden, rotierenden Kühlersieb sind bei 54 angeordnet. Ein entsprechendes Kühlsystem ist am besten in der US-A-4,906,262 beschrieben, deren Offenbarung ebenfalls hiermit aufgenommen wird.

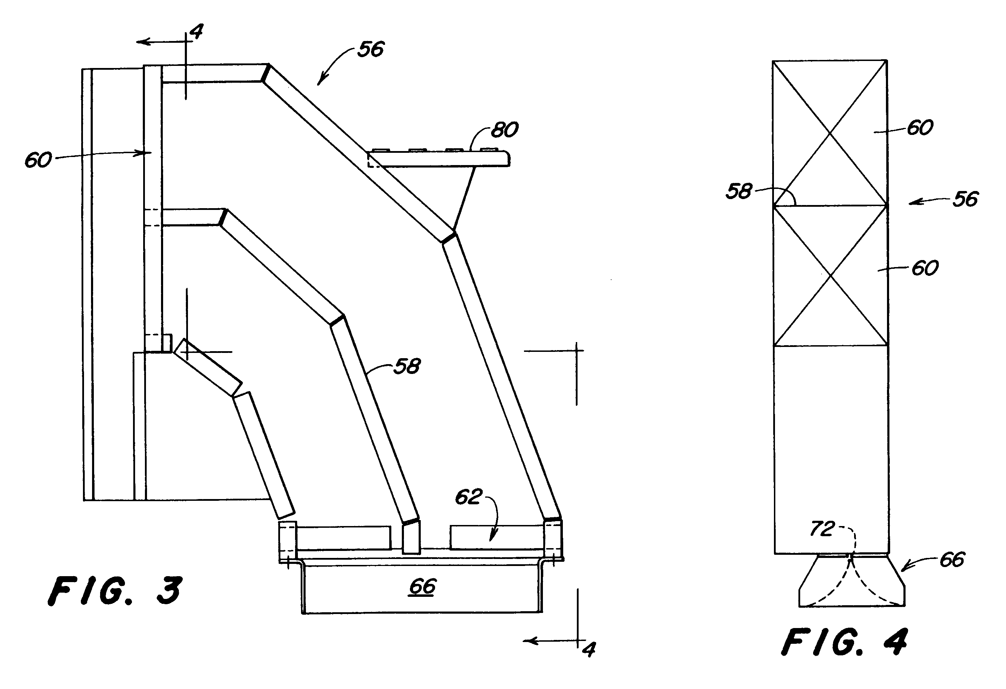

Ein Kanal 56 zum Auffangen eines Teils des Kühlluftstroms ist hinter dem Verbrennungsmotor 48 und hinsichtlich der Luftführung stromabwärts des Motorkühlgebläses angebracht. Der Kanal 56 ist am besten in den Figuren 3 und 4 gezeigt und enthält eine innere Leitwand 58, die dazu dient, einen gleichmäßigen Luftstrom innerhalb des Kanals 56 zu gewährleisten. Da Kühlluft von dem Motorkühlgebläse durch den Wärmetauscher und das rotierende Kühlersieb gesaugt wird, entsteht daraus ein horizontal gerichteter Luftstrom. Der größte Anteil dieses horizontalen Luftstroms wird dem Verbrennungsmotor 48 mittels einer Ummantelung 59 zugeführt, wobei allerdings ein Teil dieses Luftstroms von einem Einlaß 60 des Kanals 56 abgezweigt wird. Der Aufbau des Kanals 56 und die innere Leitwand 58 ändern die Richtung des Luftstroms, so daß dieser vertikal nach unten zu der Verarbeitungseinheit 24 fließt.

Die Druckluft wird an dem anderen Ende des Kanals 56 an einem Auslaß 62 ausgestoßen, der mit einer entsprechend angeordneten Öffnung in der Arbeitsplattform 52 fluchtet. Wenn der schließlich vertikal abwärts verlaufende Luftstrom den Auslaß 62 passiert, trifft er auf einen Deflektor 66, der den Luftstrom in zwei Teilluftströme, nämlich einen nach vorne gerichteten und einen nach hinten gerichteten, aufteilt. Der Deflektor 66 ändert die Richtung des Luftstroms von einem vertikal abwärts gerichteten Luftstrom in einen im wesentlichen horizontal gerichteten axialen Luftstrom mit einer vorderen und einer rückwärtigen Komponente.

Die vordere und die rückwärtige Komponente des axialen horizontal gerichteten Luftstroms verhindert eine Ansammlung von Staub und anderen Rückständen auf der Oberseite der Gehäuse der axialen, abscheidenden Verarbeitungseinheit 24. In die Seitenwände des Chassis 12 sind vordere Auslaßöffnungen 68 eingearbeitet, die für eine Entlüftung des vorderen Raums zwischen dem Deflektor 66 und den Auslaßöffnungen 68 sorgen. Staub, Spreu und Kurzstroh werden durch diese Auslaßöffnungen 68 aus der Erntemaschine 10 ausgeworfen.

Ein Spalt 70 ist für einen weiteren Ausstoß zwischen der Unterseite der Arbeitsplattform 52 und der rückwärtigen Oberseite der axialen Verarbeitungseinheit 24 vorgesehen und wird dazu benutzt, den rückwärtigen Raum zwischen dem Deflektor 66 und dem rückwärtigen Bereich der axialen Verarbeitungseinheit 24 zu entlüften.

Die in einen Scheitelpunkt auslaufende Spitze 72 des möwenflügelartigen Deflektors 66 ist quer zur Längsachse der Verarbeitungseinheit 24 ausgerichtet und befindet sich ungefähr zwischen dem ersten und dem zweiten Drittel des Auslasses 62 von hinten her gesehen. Diese Anordnung ist deshalb so getroffen, um mehr Druckluft nach vorne zu blasen, da die Auslaßöffnungen 68 strömungsungünstiger sind als der Spalt 70, was daher kommt, daß der Luftstrom zu den Auslaßöffnungen 68 um 90° umgelenkt werden muß, um durch die Seitenwände auszutreten. Im rückwärtigen Bereich wird weniger Luft benötigt, weil der quer ausgerichtete Spalt 70 besser zu dem sich über die Verarbeitungseinheit 24 bewegenden Luftstrom ausgerichtet ist.

Auf dem Kanal 56 ist eine Stufe 80 angebracht, die die Wartung des Verbrennungsmotors 48 und anderer Einheiten der Erntemaschine 10 vereinfacht.

## Patentansprüche

1. Erntemaschine (10), insbesondere Mähdrescher, mit einem Gebläse und einer von einem Chassis (12) zumindest teilweise umgebenen Verarbeitungseinheit (24), wobei Rückstände anfallen, die sich innerhalb des Chassis (12) im Bereich der Verarbeitungseinheit (24) anlagern, dadurch gekennzeichnet, daß von dem Gebläse ein Kanal (56) in das Chassis (12) abzweigt, der Druckluft zu den angelagerten Rückständen führt und das Chassis (12) wenigstens eine Auslaßöffnung (68) zur Ableitung der Druckluft mit den Rückständen enthält.

2. Erntemaschine nach Anspruch 1, dadurch gekennzeichnet, daß das Gebläse einer Kühlanlage, insbesondere eines Verbrennungsmotors oder einer Klimaanlage, zugeordnet ist.

3. Erntemaschine nach Anspruch 1 oder 2, dadurch gekennzeichnet, daß die Verarbeitungseinheit (24) als eine Axial-Dresch- und/oder Abscheideeinheit ausgebildet ist.

4. Erntemaschine nach einem oder mehreren der vorherigen Ansprüche, dadurch gekennzeichnet, daß der Kanal (56) auslaßseitig mit einem Deflektor (66) versehen ist, der die Druckluft über die Oberseite der Verarbeitungseinheit (24) leitet.

5. Erntemaschine nach einem oder mehreren der vorherigen Ansprüche, dadurch gekennzeichnet, daß im Innern des Kanals (56) eine Leitwand (58) vorgesehen ist.

6. Erntemaschine nach einem oder mehreren der vorherigen Ansprüche, dadurch gekennzeichnet, daß die Druckluft in horizontaler Richtung an einem Verbrennungsmotor (48) vorbei und in vertikaler Richtung zu der Verarbeitungseinheit (24) abgeführt wird.

7. Erntemaschine nach einem oder mehreren der vorherigen Ansprüche, dadurch gekennzeichnet, daß der Deflektor (66) die Druckluft in verschiedene Richtungen, insbesondere nach vorne und nach hinten mit Bezug auf die Längsachse der Erntemaschine, leitet.

8. Erntemaschine nach Anspruch 7, dadurch gekennzeichnet, daß der eine Teildruckluftstrom durch seitliche Auslaßöffnungen (68) in dem die Verarbeitungseinheit (24) aufnehmenden Chassis (12) und der andere Teildruckluftstrom durch einen Spalt (70) zwischen der Verarbeitungseinheit (24) und einer Wand des Chassis (12) entweicht.

## Claims

1. A harvesting machine, (10) particularly a combine harvester, with a blower and a processing unit (24) at least partially surrounded by a chassis body (12), wherein residues occur and build up inside the chassis body (12) in the region of the processing unit (24), characterized in that a channel (56) branches off from the blower into the chassis body (12) and feeds compressed air on to the built up residues, and the chassis body (12) has at least one outlet opening (68) for discharging the compressed air with the residues.

2. A harvesting machine according to claim 1, characterized in that a cooling arrangement, especially of an internal combustion engine or an air-conditioner, is associated with the blower.

3. A harvesting machine according to claim 1 or 2, characterized in that the processing unit (24) is in the form of an axial threshing and/or separating unit.

4. A harvesting machine according to one or more of the preceding claims characterized in that the channel (56) is provided with a deflector (66) at its outlet end which guides the compressed air over the upper side of the processing unit (24).

5. A harvesting machine according to one or more of the preceding claims, characterized in that a guide wall (58) is provided in the interior of the channel (56).

6. A harvesting machine according to one or more of the preceding claims, characterized in that the compressed air is led off in a horizontal direction past an internal combustion engine (48) and in a vertical direction to the processing unit (24).

7. A harvesting machine according to one or more of the preceding claims, characterized in that the deflector (66) guides the compressed air in different directions, particularly forwards and rearwards relative to the longitudinal axis of the harvesting machine.

8. A harvesting machine according to claim 7, characterized in that one component compressed air stream escapes through side outlet openings (68) in the chassis body (12) receiving the processing unit (24) and the other component compressed air stream escapes through a gap (70) between the processing unit (24) and a wall of the chassis body (12).

## Revendications

1. Moissonneuse (10), notamment moissonneusebatteuse, comportant une soufflante et une unité de traitement (24) entourée au moins partiellement par un châssis (12), et dans laquelle des résidus, qui se forment, s'accumulent à l'intérieur du châssis (12) dans la zone de l'unité de traitement, (24) caractérisée en ce qu'à partir de la soufflante s'étend en dérivation, dans le châssis (12), un canal (56), qui envoie de l'air comprimé aux résidus accumulés et que le châssis (12) contient au moins une ouverture de sortie (68) pour évacuer l'air comprimé avec les résidus.

2. Moissonneuse selon la revendication 1, caractérisée en ce que la soufflante est associée à une installation de refroidissement, notamment d'un moteur à combustion interne ou d'une installation de climatisation.

3. Moissonneuse selon la revendication 1 ou 2, caractérisée en ce que l'unité de traitement (24) est réalisée sous la forme d'une unité de battage et/ou de séparation axiale.

4. Moissonneuse selon une ou plusieurs des revendications précédentes, caractérisée en ce que le canal (56) est équipé, côté sortie, d'un déflecteur (66), qui envoie l'air comprimé au-dessus de la face supérieure de l'unité de traitement (24).

5. Moissonneuse selon une ou plusieurs des revendications précédentes, caractérisée en ce qu'une chicane (58) est prévue à l'intérieur du canal (56).

6. Moissonneuse selon une ou plusieurs des revendications précédentes, caractérisée en ce que l'air comprimé circule, dans la direction horizontale, le long d'un moteur à combustion interne (48) et est évacué, dans la direction verticale, en direction de l'unité de traitement (24).

7. Moissonneuse selon une ou plusieurs des revendications précédentes, caractérisée en ce que le déflecteur (66) dirige l'air comprimé dans des directions différentes, notamment vers l'avant et vers l'arrière par rapport à l'axe longitudinal de la moissonneuse.

8. Moissonneuse selon la revendication 7, caractérisée en ce qu'un courant d'air comprimé partiel s'évacue, par des ouvertures de sortie latérales (68), qui sont ménagées dans le châssis (12) logeant l'unité de traitement (24) et que l'autre courant d'air comprimé partiel s'évacue par une fente (70) présente entre l'unité de traitement (24) et une paroi du châssis (12).
